# EUROPEAN PATENT APPLICATION

(11) **EP 3 965 191 A1**
(43) Date of publication of application: **09.03.2022**
(21) Application number: 21191944.4
(22) Date of filing: 18.08.2021
(51) Int. Cl.: H01M 4/36, H01M 4/38, H01M 4/587, H01M 4/62, H01M 4/66, H01M 4/134, H01M 4/02

(54) **NEGATIVE ELECTRODE ACTIVE MATERIAL, NEGATIVE ELECTRODE AND BATTERY**

(30) Priority: 18.08.2020 US 202063066826 P
(71) Applicant: Industrial Technology Research Institute, Chutung, Hsinchu 310401 (TW)
(72) Inventor: Lai, Guan-Lin, 310 Hsinchu (TW); Chen, Chen-Chung, 325015 Taoyuan City (TW); Yang, Chang-Rung, 300 Hsinchu City (TW); Yeh, Ting-Ju, 112 Taipei City (TW)
(74) Representative: Zimmermann & Partner Patentanwälte mbB

(57) **Abstract**

A negative electrode active material, a negative electrode and a battery are provided. The negative electrode active material includes an active particle and a modification layer. The active particle contains a silicon element, a carbon element, or a combination thereof. The modification layer covers on the surface of the active particle. The modification layer contains a reactive functional group of a coupling agent and a residual functional group of a metal compound. The reactive functional group of the coupling agent is bounded between the active particle and the residual functional group of the metal compound. The residual functional group of the metal compound contains a metal atom.

## Description

### TECHNICAL FIELD

The disclosure relates to a negative electrode active material, a negative electrode, and a battery.

### BACKGROUND

Lithium-ion batteries have been improved with increasing energy density. Conventional graphite materials have been not able to meet design requirements for the high specific energy batteries. A silicon (Si) based material has a capacity up to 4200mAh/g, and can be a platform, similar to graphite, to be intercalated with lithium, and therefore becomes the most desired material for a high-capacity negative electrode of next generation. However, a volume of a silicon material would expand by 300% or more during being alloyed with lithium (Li). It results in pulverizing and crushing of the particle of silicon material, and destroying of a solid electrolyte interphase (SEI). It affects the cycle life of the lithium-ion battery seriously.

A silicon oxide (SiOₓ) material would be a possible material applied for a high-capacity silicon based negative electrode. However, the first cycle coulombic efficiency of the silicon oxide is much less than those of graphite and silicon carbide materials. It obstructs applications of the silicon oxide material.

### SUMMARY

The present disclosure relates to a negative electrode active material, a negative electrode and a battery.

According to a concept of the present disclosure, a negative electrode active material is provided. The negative electrode active material comprises an active particle and a modification layer. The active particle contains a silicon element, a carbon element, or a combination thereof. The modification layer covers on a surface of the active particle. The modification layer contains a reactive functional group of a coupling agent and a residual functional group of a metal compound. The reactive functional group of the coupling agent is bounded between the active particle and the residual functional group of the metal compound. The residual functional group of the metal compound contains a metal atom.

According to another concept of the present disclosure, a negative electrode is provided. The negative electrode comprises a current collector and an active material layer. The active material layer is on the current collector. The active material layer comprises the negative electrode active material disclosed above, a conductive additive, and a binder.

According to yet another concept of the present disclosure, a battery is provided. The battery comprises a positive electrode, the negative electrode disclosed above, a separator and an electrolyte solution. The separator is between the positive electrode and the negative electrode. The electrolyte solution is between the positive electrode and the negative electrode.

The above and other embodiments of the disclosure will become better understood with regard to the following detailed description of the nonlimiting embodiment(s).

### DETAILED DESCRIPTION

According to embodiments of the present disclosure, a negative electrode active material, and a negative electrode and a battery applying the negative electrode active material are provided. The battery has a longer cycle life, and a higher coulombic efficiency.

According to embodiments of the present disclosure, the negative electrode active material may comprise an active particle and a modification layer.

The active particle (negative electrode active particle) contains a silicon element, a carbon element, or a combination thereof. The active particle may comprise a silicon (Si), a silicon oxide (SiOₓ), a carbon modified silicon oxide, a silicon carbide (SiC), a carbon material, or a combination thereof. For example, the carbon material comprises natural graphite, artificial graphite, soft carbon, hard carbon, graphene, or graphitized carbon fiber, and so on.

The modification layer covers on a surface of the active particle. The modification layer contains a reactive functional group of a coupling agent and a residual functional group of a metal compound. According to an embodiment of the present disclosure, the modification layer and the surface of the active particle have a chemical bonding therebetween, wherein the reactive functional group of the coupling agent is bounded between the active particle and the residual functional group of the metal compound. The residual functional group of the metal compound contains a metal atom, for example, comprising lithium (Li), sodium (Na), potassium (K), or a combination thereof.

The coupling agent may be a silane compound. In a chemical structure of the silane compound, a substituent (e.g. a first reactive substituent) on a silicon atom may be a hydrolyzable group or a methyl group, and another substituent (e.g. a second reactive substituent) on the silicon atom may be a moiety containing a sulfhydryl group (-SH), an epoxide group, a vinyl group, or an amino group.

The silane compound may be represented with the following chemical formula (1).

QₘH₃₋ₘSiA (1)

Q (referred to as the first reactive substituent hereafter) in the chemical formula (1) may be independently a hydrolyzable group or a methyl group, and m=1 to 3. A (referred to as the second reactive substituent hereafter) in the chemical formula (1) may be a moiety containing an end group comprising a sulfhydryl group (-SH), an epoxide group, a vinyl group, or an amino group. The hydrolyzable group may be an alkoxy group. The alkoxy group may be represented with -OR, wherein R is an alkyl group having a carbon number of 1 to 5. In some embodiments, the hydrolyzable group comprises a methoxy group (-OCH₃) or an ethoxy group (-OCH₂CH₃). In some embodiments, the moiety containing the end group comprising the sulfhydryl group (-SH), the epoxide group, the vinyl group, or the amino group may comprise an alkylene having a carbon number of 1 to 8. For example, the moiety containing the end group comprising the sulfhydryl group (-SH) may be -(CH₂)ₙ-SH, wherein n=1 to 8.

The coupling agent may comprise (3-mercaptopropyl) trimethoxysilane (MPTMS), 3-mercaptopropylmethyldimethoxysilane (MPDMS), 3-glycidoxypropyltrimethoxysilane (GPTMS), 3-aminopropyltrimethoxysilane (APTMS), 3-aminopropyltriethoxysilane (APTES), or a combination thereof.

In some embodiments, the metal compound may comprise a metal hydroxide or a lithium compound. The metal atom of the metal hydroxide may comprise lithium (Li), sodium (Na), potassium (K), or a combination thereof. The metal hydroxide comprises sodium hydroxide (NaOH), lithium hydroxide (LiOH), potassium hydroxide (KOH), or a combination thereof. The lithium compound comprises lithium carbonate (Li₂CO₃), lithium bicarbonate (LiHCO₃), lithium sulfide (Li₂S), lithium carbide (Li₂C₂), lithium dihydrogen phosphate (LiH₂PO₄), or a combination thereof.

In some embodiments, a preparing method for the negative electrode active material may comprise the following steps. First, the coupling agent and the active particle are mixed to obtain a first mixture. The first reactive substituent (hydrolyzable group) of the coupling agent can form a bonding with the active particle. For example, the silicon oxide (active particle) may contain a hydroxy group. The bonding between the coupling agent and the active particle may be formed by a hydrolysis reaction of the hydrolyzable group of the coupling agent with the hydroxy group (-OH) on the surface of the active particle. For example, the bonding may be formed by a dehydration condensation reaction of the hydrolyzable group of the coupling agent with the hydroxy group on the surface of the active particle. In the first mixture, the reactive functional group of the coupling agent remaining after the reaction of the coupling agent with the active particle may contain the second reactive substituent (the moiety containing the sulfhydryl group, the epoxide group, the vinyl group, or the amino group). That is, the second reactive substituent may not react with the active particle, and may remain in the reactive functional group after the reaction of the coupling agent with the active particle. In some embodiments, a weight of the coupling agent is 0.1% to 2% of a weight of the active particle.

Next, the first mixture and the metal compound are mixed to obtain a second mixture. The second reactive substituent (the moiety containing the sulfhydryl group, the epoxide group, the vinyl group, or the amino group) contained by the reactive functional group of the coupling agent in the first mixture can form a bonding with the metal compound. For example, the second reactive substituent of the coupling agent can form a hydrogen bond with the metal compound. For example, a bonding between the second reactive substituent and the metal compound may be formed by a hydrolysis reaction of the second reactive substituent of the coupling agent with the metal compound. For example, a bonding between the second reactive substituent and the metal compound may be formed by a dehydration condensation reaction of the second reactive substituent of the coupling agent with the metal compound. The residual functional group of the metal compound remaining after the reaction of the metal compound with the reactive functional group of the coupling agent contains the metal atom. In some embodiments, the weight ratio of the coupling agent to the metal compound is 1:1 to 1:10. The negative electrode active material described above can be obtained by the reactions mentioned above. That is, the negative electrode active material comprises the active particle and the modification layer. The modification layer covers on the surface of the active particle. The modification layer contains the reactive functional group of the coupling agent and the residual functional group of the metal compound. In addition, the reactive functional group of the coupling agent is bounded between the active particle and the residual functional group of the metal compound. The residual functional group of the metal compound contains the metal atom. In some embodiments, the first mixture and a solution of the metal compound may be mixed to obtain the second mixture. The solution of the metal compound comprises the metal compound and a solvent. The solvent may comprise water (such as deionized water). The solution of the metal compound may be an aqueous solution comprising the metal compound.

In some embodiments, the negative electrode active material aforementioned can be applied as the negative electrode for the battery.

The present disclosure provides the battery. The battery comprises the negative electrode, a positive electrode, a separator and an electrolyte solution. The separator is disposed between the positive electrode and the negative electrode to isolate the positive electrode from the negative electrode. An accommodating space is defined between the positive electrode and the negative electrode. The electrolyte solution is disposed in the accommodating space, and between the positive electrode and the negative electrode.

The negative electrode of the battery comprises a current collector and an active material layer. The active material layer is disposed on the current collector. The active material layer comprises the negative electrode active material, a conductive additive and a binder. The active material layer may be formed by a negative electrode active material slurry (or negative electrode active material slurry composition). The negative electrode active material slurry comprises the negative electrode active material, the conductive additive and the binder. The conductive additive may comprise carbon black, conductive graphite, carbon nanotube, carbon fiber, graphene, or a combination thereof. The binder may comprise poly(vinylidene fluoride) (PVDF), styrene-butadiene rubber (SBR), poly(acrylic acid) (PAA), polyacrylonitrile (PAN), polyethylene glycol(PEG), carboxymethyl cellulose (CMC), polyethylene oxide (PEO), or a combination thereof. The current collector may comprise a metal, such as a copper sheet.

The positive electrode of the battery aforementioned comprises a positive electrode active material. The positive electrode active material comprises lithium cobalt oxide (LCO), lithium nickel manganese cobalt oxide (NMC), lithium nickel cobalt aluminum oxide (NCA), lithium iron phosphate (for example LiFePO₄, referred to as LFP), or a combination thereof.

The separator may comprise polyethylene (PE), polypropylene (PP), aramid, ceramic, or a combination thereof.

The electrolyte solution mentioned above may comprise a lithium salt, a solvent, and an acrylic resin. The solvent may comprise propylene carbonate, ethylene carbonate, methyl ethyl carbonate, dimethyl carbonate, diethyl carbonate, fluorinated ethylene carbonate, or a combination thereof.

For the sake of clear and easy understanding the purpose, characteristic and advantage of the present disclosure described above, specific examples are disclosed in detail as below.

### <Example 1>

Based on a weight of a solid content of a negative electrode active material slurry, 0.2 wt% of (3-mercaptopropyl) trimethoxysilane used as a coupling agent, 96.05 wt% of SiO/C (a mixture of a silicon oxide and a carbon material, brand: BTR-SiO550-1A) used as an active particle, and 0.30 wt% of Super-p (carbon black) used as a conductive additive were mixed uniformly to obtain a first mixture. Next, a LiOH aqueous solution (with a concentration of 5wt% to 10wt%) was added into the first mixture to obtain a second mixture. The content of the LiOH in the LiOH aqueous solution was 0.2wt % of the active particle (SiO/C). In addition, a pre-reaction treatment was performed to the second mixture by a hydration method with stirring and mixing for 120 minutes in a condition at 45°C. By which, the second mixture prepared comprised a negative electrode active material: a SiO/C particle having a modified surface. Then, in addition to the negative electrode active material (the SiO/C particle having the modified surface), based on the weight of the solid content of the negative electrode active material slurry, a conductive carbon solution CNT (brand: TUBALL^{™}, containing carbon nanotube, purchased from OCSiAl) having a solid content occupying 0.495 wt%, an electrode binder CMC having a solid content occupying 1.28 wt%, and SBR having a solid content occupying 1.48 wt% were uniformly dispersed in deionized water to form the negative electrode active material slurry (having the solid content about 43 wt%) having a uniform structure. The negative electrode active material slurry was coated on a current collector of metal copper sheet to obtain a negative electrode plate.

Based on a weight of a solid content of a positive electrode active material slurry, 97.3 wt% of NMC811, 1wt % of Super-p, 1.4 wt% of PVDF5130, and 0.3 wt% of CNT were uniformly dispersed in a solvent of N-methylpyrrolidone (NMP) to form the positive electrode active material slurry (having the solid content about 70 wt%) having a uniform structure. The positive electrode active material slurry was coated on a current collector of metal aluminum sheet to obtain a positive electrode plate.

The negative electrode plate, the positive electrode plate and the separator were assembled into a standard battery cell (Jelly Roll) having a size of 65mm (height) x 60mm (width) x 70mm (length), i.e. the 656070 standard battery cell. 16.5 g of a liquid standard electrolyte solution was poured into the standard battery cell. Then, the standard battery cell was encapsulated to obtain a lithium-ion secondary battery.

### <Example 2>

A lithium-ion secondary battery of Example 2 was manufactured by a method similar with the method for manufacturing the lithium-ion secondary battery of Example 1 with a difference in that during preparing a negative electrode active material slurry, a content of LiOH in a LiOH aqueous solution was 0.3wt % of an active particle SiO/C.

### <Example 3>

A lithium-ion secondary battery of Example 3 was manufactured by a method similar with the method for manufacturing the lithium-ion secondary battery of Example 1 with a difference in that during preparing a negative electrode active material slurry, a content of LiOH in a LiOH aqueous solution was 0.4wt % of an active particle SiO/C.

### <Example 4>

A lithium-ion secondary battery of Example 4 was manufactured by a method similar with the method for manufacturing the lithium-ion secondary battery of Example 2 with the following differences during preparing a negative electrode active material slurry in Example 4. The LiOH aqueous solution in Example 2 was replaced by a KOH aqueous solution. A content of KOH in the KOH aqueous solution was 0.3wt % of an active particle SiO/C. Moreover, a pre-reaction treatment was performed to a second mixture by a hydration method with stirring and mixing for 60 minutes in a condition at 45°C.

### <Example 5>

A lithium-ion secondary battery of Example 5 was manufactured by a method similar with the method for manufacturing the lithium-ion secondary battery of Example 1 with the following differences during preparing a negative electrode active material slurry in Example 5. An added amount of an active particle SiO/C (a mixture of a silicon oxide and a carbon material, brand: BTR-SiO550-1A) was 96.29 wt% (based on a weight of a solid content of the negative electrode active material slurry). A content of LiOH in a LiOH aqueous solution was 1 wt % of the active particle. Moreover, a pre-reaction treatment was performed to a second mixture by a hydration method with stirring and mixing for 60 minutes in a condition at 45°C.

### <Example 6>

A lithium-ion secondary battery of Example 6 was manufactured by a method similar with the method for manufacturing the lithium-ion secondary battery of Example 5 with the following differences during preparing a negative electrode active material slurry in Example 6. The coupling agent was 3-aminopropyltriethoxysilane (APTES). Moreover, a content of LiOH in a LiOH aqueous solution was 0.2 wt % of an active particle SiO/C.

### <Comparative example 1 >

A lithium-ion secondary battery of Comparative example 1 was manufactured by a method similar with the method for manufacturing the lithium-ion secondary battery of Example 1 with a difference in that a negative electrode active material of Comparative example 1 was a SiO/C particle having an un-modified surface.

### <Comparative example 2>

A lithium-ion secondary battery of Comparative example 2 was manufactured by a method similar with the method for manufacturing the lithium-ion secondary battery of Comparative example 1 with a difference in that Comparative example 2 used a LiOH aqueous solution having a concentration of 0.2wt%, and used no any coupling agent.

### <Evaluation>

Table 1 lists the results of the coulombic efficiencies of the 1^{st} cycle, the 2^{nd} cycle, and the 3^{rd} cycle, and the capacity retentions at the 400^{th} cycle and the 800^{th} cycle of the lithium-ion secondary batteries of Example 1 to Example 6, and Comparative example 1 to Comparative example 2. The coulombic efficiencies were measured with the charge-discharge cycles of 0.1C charge and 0.1C discharge. The capacity retentions (capacity percentage rate calculated based on the maximum storage capacity) were measured with the charge-discharge cycles of 0.5C charge and 0.5C discharge.

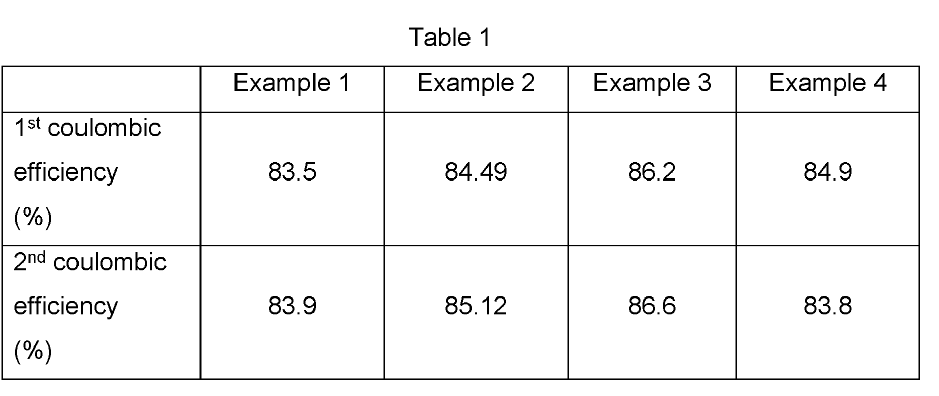

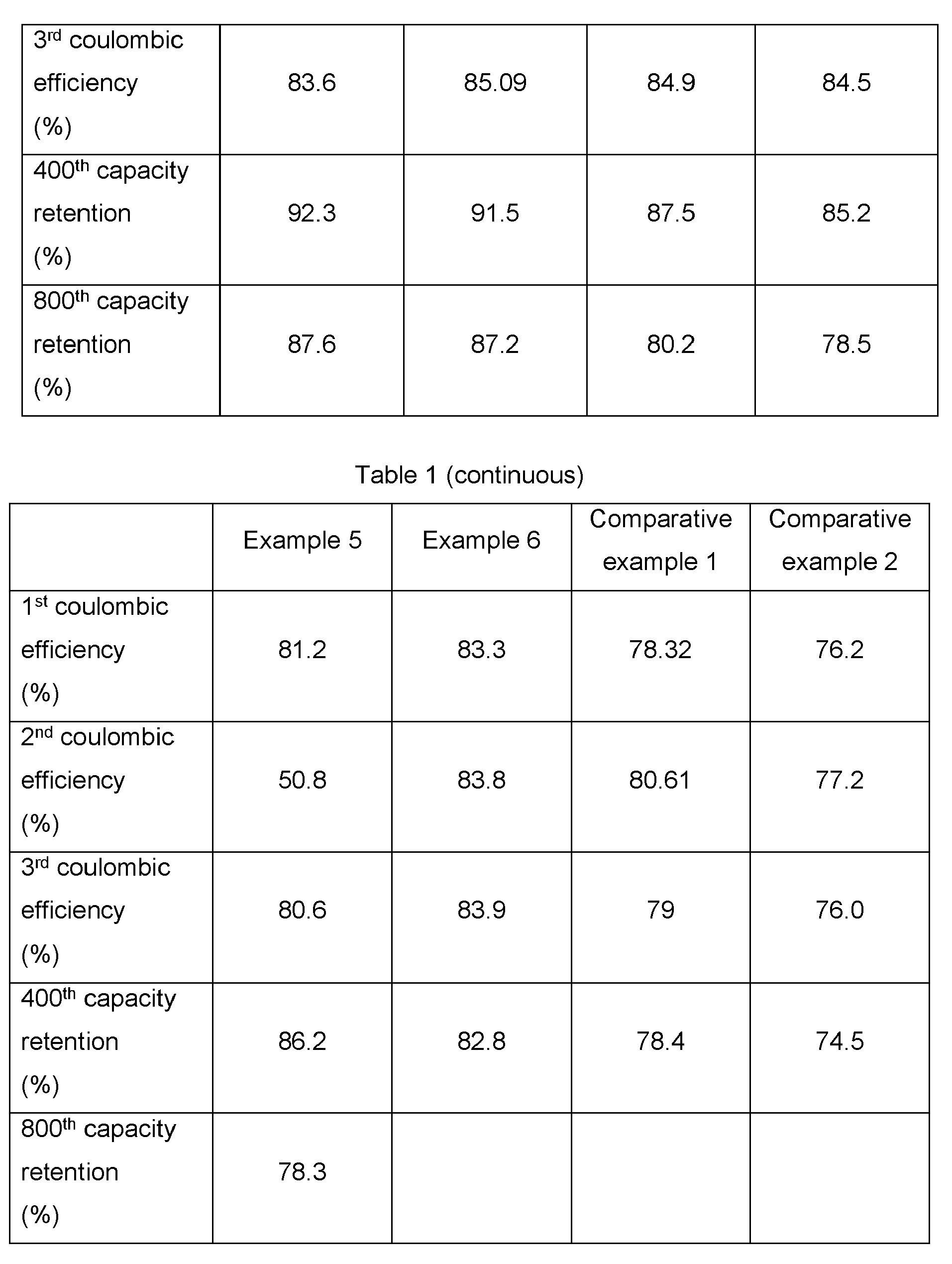

It can be known from the test data that the batteries having the SiO/C particle having the modified surface in the examples have a longer cycle life, and a higher coulombic efficiency, comprising a higher first time (1^{st}) coulombic efficiency than the batteries without the SiO/C particle having the modified surface in the comparative examples. Moreover, the capacity retentions at the 800^{th} cycles of Example 1 and Example 2 were 87.6% and 87.2% respectively, which were both significantly superior to the capacity retentions 78.4% and 74.5% at the 400^{th} cycles of Comparative example 1 and Comparative example 2.

While the disclosure has been described by way of example and in terms of the exemplary embodiment(s), it is to be understood that the disclosure is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A negative electrode active material, comprising:
an active particle containing a silicon element, a carbon element, or a combination thereof; and
a modification layer covering on a surface of the active particle, wherein the modification layer contains a reactive functional group of a coupling agent and a residual functional group of a metal compound, the reactive functional group of the coupling agent is bounded between the active particle and the residual functional group of the metal compound, the residual functional group of the metal compound contains a metal atom.

2. The negative electrode active material according to claim 1, wherein the active particle comprises a silicon, a silicon oxide, a carbon modified silicon oxide, a silicon carbide, a carbon material, or a combination thereof.

3. The negative electrode active material according to any of claims 1 to 2, wherein the coupling agent is a silane compound, wherein the silane compound contains a silicon atom and two substituents on the silicon atom, one of the two substituents is a hydrolyzable group or a methyl group, the other of the two substituents is a moiety containing a sulfhydryl group, an epoxide group, a vinyl group, or an amino group.

4. The negative electrode active material according to claim 3, wherein the hydrolyzable group is an alkoxy group.

5. The negative electrode active material according to any of claims 1 to 4, wherein the coupling agent is a silane compound represented with a chemical formula (1) of QₘH₃₋ₘSiA, wherein, m=1 to 3,
Q is independently a hydrolyzable group or a methyl group,
A is a moiety containing an end group comprising a sulfhydryl group, an epoxide group, a vinyl group, or an amino group.

6. The negative electrode active material according to claim 5, wherein the hydrolyzable group is an alkoxy group.

7. The negative electrode active material according to claim 1, wherein the coupling agent comprises (3-mercaptopropyl) trimethoxysilane, 3-mercaptopropylmethyldimethoxysilane, 3-glycidoxypropyltrimethoxysilane, 3-aminopropyltrimethoxysilane, 3-aminopropyltriethoxysilane, or a combination thereof.

8. The negative electrode active material according to any of claims 1 to 7, wherein the metal atom comprises lithium, sodium, potassium, or a combination thereof.

9. The negative electrode active material according to any of claims 1 to 8, wherein the metal compound comprises a metal hydroxide or a lithium compound.

10. The negative electrode active material according to claim 9, wherein the metal hydroxide comprises sodium hydroxide, lithium hydroxide, potassium hydroxide, or a combination thereof.

11. A negative electrode, comprising:
a current collector; and
an active material layer on the current collector, and comprising the negative electrode active material according to claim 1, a conductive additive, and a binder.

12. The negative electrode according to claim 11, wherein the conductive additive comprises carbon black, conductive graphite, carbon nanotube, carbon fiber, graphene, or a combination thereof.

13. The negative electrode according to any of claims 11 to 12, wherein the binder comprises poly(vinylidene fluoride), styrene-butadiene rubber, poly(acrylic acid), polyacrylonitrile, polyethylene glycol, carboxymethyl cellulose, polyethylene oxide, or a combination thereof.

14. The negative electrode according to any of claims 11 to 13, wherein the current collector comprises a copper sheet.

15. A battery, comprising:
a positive electrode;
a negative electrode according to any of claims 11 to 14;
a separator between the positive electrode and the negative electrode; and
an electrolyte solution between the positive electrode and the negative electrode.

16. The battery according to claim 15, wherein the positive electrode comprises a positive electrode active material, the positive electrode active material comprises lithium cobalt oxide, lithium nickel manganese cobalt oxide, lithium nickel cobalt aluminum oxide, lithium iron phosphate, or a combination thereof.
